# EUROPEAN PATENT APPLICATION

(11) **EP 1 408 500 A2**
(43) Date of publication of application: **14.04.2004**
(21) Application number: 03022950.4
(22) Date of filing: 09.10.2003
(51) Int. Cl.: G11B 20/10, G11B 27/10

(54) **Information providing system and method and information recorded medium**

(30) Priority: 09.10.2002 JP 2002296574
(71) Applicant: Pioneer Corporation, Tokyo-to (JP)
(72) Inventor: Shibasaki, Hiroaki, Tokyo-to (JP)
(74) Representative: Grünecker, Kinkeldey, Stockmair & Schwanhäusser Anwaltssozietät

(57) **Abstract**

An information providing system (S) has an information providing apparatus (2) for providing information via a network (4), a right holder's side apparatus (3) which is connected to the information providing apparatus (2) via the network (4), the right holder's side having a right of information provided by the information providing apparatus (2); and an information reproducing apparatus (1) which can have access to the information providing apparatus via the network (4), has an information reproducing device (11) for reproducing program information recorded on a recording medium, and transmits identification information corresponding to the program information via the network (4) to the information providing apparatus (2) in order to request related information when the program information is reproduced. The information providing apparatus (2) receives via the network (4) the identification information transmitted from the information reproducing apparatus (1), acquires the related information based on the received identification information, provides the related information via the network (4) to the information reproducing apparatus (1), and provides value information according to the provided related information via the network (4) to the right holder's side apparatus (3).

## Description

### BACKGROUND OF THE INVENTION

### Field of the Invention:

The present invention relates to the technical field of a system and a method that can acquire predetermined information via a network and provide the information to the user in the case where program information recorded on one recording medium is reproduced.

### Description of the Related Art:

In recent years,information reproducing apparatuses have become prevalent in which recording mediums such as a CD (Compact Disc) for recording sound data (program information) such as music and recording mediums such as a DVD (Digital Versatile Disc) for recording image data as well as sound data are stored in the same storing part, and in response to an instruction from the user, a disc changer automatically exchanges a recording medium to be reproduced and reproduction is performed.

However, in such information reproducing apparatuses, when sound data is reproduced from a CD having not recorded image data, a display screen has a so-called blue background, resulting in no effective use of the display.

In consideration of the above problem, in a reproducing apparatus disclosed in Japanese Patent Laid- Open No. 2000-268543, the user matches image data having been recorded on a memory card or the like with sound data, records the image data on a HD (Hard Disc) beforehand in the reproducing apparatus, and reproduces the sound data from a CD . In this case, recorded image data is read and is outputted onto a display.

Further, information reproducing/recording apparatuses capable of automatically recording sound data recorded on a CD, that is, CD ripping have been known in recent years. According to such apparatuses, for example, the user can record sound data, which has been stored in many CDs purchased by the user, on a HD. Particularly when such apparatuses are on-vehicle, it is possible to eliminate a troublesome procedure of bringing many CDs in a vehicle every time the user rides in a vehicle.

However, in such conventional information producing apparatuses, it is necessary to record image data, which is to be shown on a display, beforehand on a HD in the reproducing apparatus when sound data is reproduced from a CD. Hence, it is considered that the procedure is quite troublesome and complicated to the user.

Moreover, for example, if sound data stored in a CD purchased by the user is recorded on a HD in the conventional on-vehicle information reproducing/recording apparatus, it is not necessary to bring the CD in a vehicle. However, jacket photographs stored in the package of the CD and a booklet describing lyrics and so on are not brought into the vehicle. Although the jacket photographs and the booklet describing lyrics and so on are also valuable contents included in a value paid for purchasing the CD, the user cannot fully use the contents included in the value in the end.

For this reason, if information including jacket photographs stored in a CD package and a booklet describing lyrics and so on is provided from the information provider to the user on a network in the future, it is considered that the information provider will need to pay a value such as a royalty fee to the right holder having a right (copyright, etc.) of the jacket photographs. Moreover, in reverse, it is considered that the right holder will need to pay an advertising rate, which is included in the provided information, to the information provider. Anyway, it is assumed that the procedure becomes complicated.

It is therefore an object of the present invention to provide an information providing system and method and so on whereby a value corresponding to information can be handled more efficiently when information related to program information is provided from the information provider to the user.

. The above object of the present invention can be achieved by an information providing system provided with: an information providing apparatus for providing information via a network, a right holder's side apparatus which is connected to the information providing apparatus via the network, the right holder's side having a right of information provided by the information providing apparatus; and an information reproducing apparatus which can have access to the information providing apparatus via the network, has an information reproducing device for reproducing program information recorded on a recording medium, and transmits identification information corresponding to the program information via the network to the information providing apparatus in order to request related information constituted of at least any one of accompanied information related the program information and advertisement information related the program information or the accompanied information when the program information is reproduced; wherein the information providing apparatus comprises: an identification information receiving device which receives via the network the identification information transmitted from the information reproducing apparatus; a related information acquiring device which acquires the related information based on the received identification information; a related information providing device which provides the related information via the network to the information reproducing apparatus; and a value information providing device which provides value information according to the provided related information via the network to the right holder's side apparatus.

According to the present invention, when related information is provided to the information reproducing apparatus , a value according to the related information can be handled more efficiently, and value information can be promptly informed to the right holder's side. Therefore, it is possible to further activate a system for providing the related information.

In one aspect of the system of the present invention, the information reproducing apparatus comprises an information recording device which reproduces the program information recorded on the recording medium and records the program information on another recording medium.

In another aspect of the system of the present invention, regarding the value information, a value according to the related information is offset by an advertising effect of the provided related information or accompanied inevitability.

In further aspect of the system of the present invention, the value information is information indicating payment of a money according to the related information.

In further aspect of the system of the present invention, the information providing apparatus further comprises a user information managing device which manages user information for each user of the information reproducing apparatus, the user information managing device updates the user information based on the identification information every time the identification information is transmitted from the information reproducing apparatus, and the value information is managed as a part of the user information by the user information managing device.

In still further aspect of the system of the present invention, the information reproducing apparatus comprises a user presenting device which presents to a user the related information provided from the information providing apparatus when the program information is reproduced.

The above object of the present invention can be achieved by an information providing apparatus in an information providing system provided with: an information providing apparatus for providing information via a network, a right holder's side apparatus which is connected to the information providing apparatus via the network, the right holder' s side having a right of information provided by the information providing apparatus; and an information reproducing apparatus which can have access to the information providing apparatus via the network, has an information reproducing device for reproducing program information recorded on a recording medium, and transmits identification information corresponding to the program information via the network to the information providing apparatus in order to request related information constituted of at least any one of accompanied information related the program information and advertisement information related the program information or the accompanied information when the program information is reproduced; wherein the information providing apparatus comprises: an identification information receiving device which receives via the network the identification information transmitted from the information reproducing apparatus ; a related information acquiring device which acquires the related information based on the received identification information; a related information providing device which provides the related information via the network to the information reproducing apparatus; andavalueinformationprovidingdevicewhichprovides value information according to the provided related information via the network to the right holder's side apparatus.

The above object of the present invention can be achieved by an information recorded medium wherein a program for computer including an providing apparatus in an information providing system comprising: the information providing apparatus for providing information via a network, a right holder's side apparatus which is connected to the information providing apparatus via the network, the right holder's side having a right of information provided by the information providing apparatus; and an information reproducing apparatus which can have access to the information providing apparatus via the network, has an information reproducing device for reproducing program information recorded on a recording medium, and transmits identification information corresponding to the program information via the network to the information providing apparatus in order to request related information constituted of at least any one of accompanied information related the program information and advertisement information related the program information or the accompanied information when the program information is reproduced, is recorded so as to be read by the computer, the program makes the computer function as : receiving via the network the identification information transmitted from the information reproducing apparatus; acquiring the related information based on the received identification information; providing the related information via the network to the information reproducing apparatus; and providing value information according to the provided related information via the network to the right holder' s side apparatus.

The above object of the present invention can be achieved by an information providing method in an information providing system provided with: the information providing apparatus for providing information via a network, a right holder's side apparatus which is connected to the information providing apparatus via the network, the right holder's side having a right of information provided by the information providing apparatus; and an information reproducing apparatus which can have access to the information providing apparatus via the network, has an information reproducing device for reproducing program information recorded on a recording medium, and transmits identification information corresponding to the program information via the network to the information providing apparatus in order to request related information constituted of at least any one of accompanied information related the program information and advertisement information related the program information or the accompanied information when the program information is reproduced, comprising the processes of: receiving via the network the identification information transmitted from the information reproducing apparatus; acquiring the related information based on the received identification information; providing the related information via the network to the information reproducing apparatus; and providing value information according to the provided related information via the network to the right holder' s side apparatus.

### BRIEF DESCRIPTION OF THE DRAWINGS

FIG. 1 is a block diagram showing a schematic configuration of an on-vehicle AV system S as an example of an information providing system according to the present application;
FIG. 2 is a flowchart showing the operations of a control section 17 in an on-vehicle AV apparatus 1; and
FIG. 3 is a flowchart showing the operations of a control section 24 in an information server 2.

### DETAILED DESCRIPTION OF THE PREFERRED EMBODIMENTS

A preferred embodiment of the present application will be explained below in accordance with the accompanying drawings. The following embodiment will describe that the present application is used for an on-vehicle AV (Audio Visual) system. [The configuration and functions of the on-vehicle AV system]

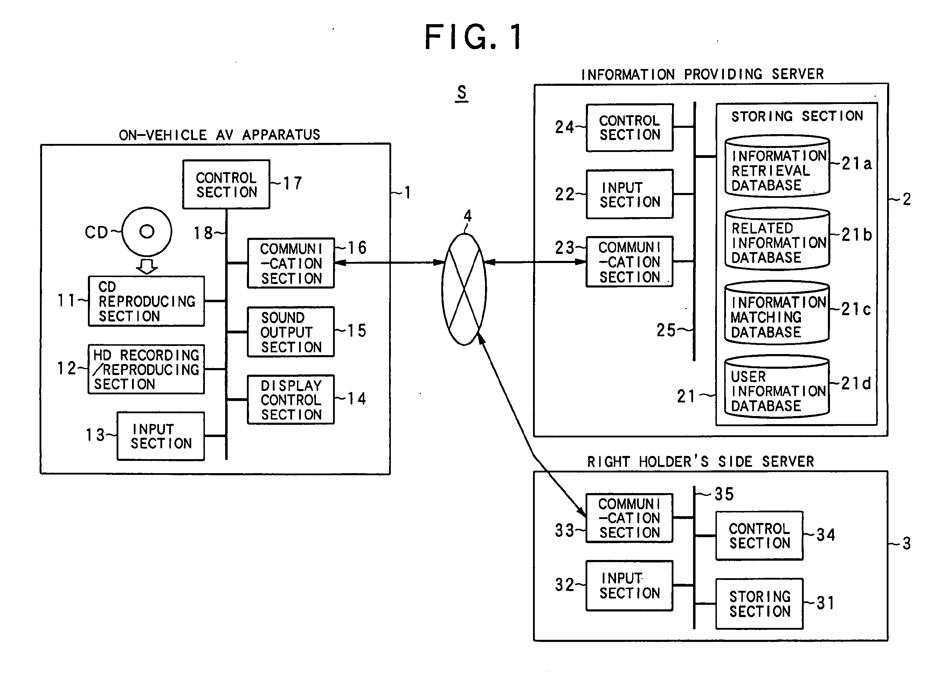

Referring to FIG. 1, the configuration and functions of the on-vehicle AV system will be firstly explained according to the present embodiment. FIG. 1 is a block diagram showing the schematic configuration of an on-vehicle AV system S as an example of the information providing system of the present application.

As shown in FIG . 1, the on -vehicle AV system S is constituted of an on-vehicle AV apparatus 1 serving as an example of an information reproducing apparatus of the present application, an information providing server 2 serving as an example of an information providing apparatus of the present application, and a right holder's side server (an example of a right holder's side apparatus of the present application) 3 of side of the right holder which holds the right (e.g., copyright) of information provided by the information providing server 2 . The information providing server 2 and the right holder's side server 3 are connected to each other via a network 4 . Further, the on-vehicle AV apparatus 1 can have access to the information providing server 2 via the network 4 . The network 4 is constituted of, for example, a mobile communication network and the Internet or the like. Additionally, a plurality of on-vehicle AV apparatuses 1 are actually provided according to the number of users.

Moreover, the right holder's side includes parties concerning the right holder (e.g., subsidiary companies, subcontracting companies, or consigned companies of a CD producing and sales company) as well as the right holder (e.g., the CD producing and sales company).

### [On-vehicle AV apparatus]

First, the configuration and functions of the on-vehicle AV apparatus 1 will be explained below.

The on-vehicle AV apparatus 1 is mounted (installed) in a vehicle. As shown in FIG. 1, the on-vehicle AV apparatus 1 has a CD (Compact Disc) reproducing section (unit) 11, a HD (Hard Disc) recording/reproducing section 12, an input section 13 including a remote controller and operating buttons, a display control section 14, a sound output section 15, a communication section 16, and a control section (controller) 17 for controlling the components. The components are connected to one another via a bus 18.

A function as an information reproducing device, which reproduces program information recorded on a CD serving as an example of a recording medium, is performed by the CD reproducing section 11 under the control of the control section 17. Moreover, under the control of the control section 17, a function as an information recording device (ripping function) is performed by the CD reproducing section 11 and the HD recording/reproducing section 12. The information recording device reproduces program information recorded on a CD serving as an example of a recording medium and records the program information on a HD serving as an example of another recording medium. Besides, the program information includes sound data (particularly music data about music), image data, text data, and compressed data thereof. The following explanation will describe music data as an example of the program information.

The CD reproducing section 11 has a loading mechanism (a mounting mechanism) for loading a CD (e.g., a CD which is legally purchased by the user and is occupied by the user), a pickup for optically reading music data recorded on a CD, a spindle motor for rotationally driving a CD, a servo circuit for performing servo control on the spindle motor and the pickup, and a signal processing section for performing predetermined demodulation on read music data ( RF signal). Under the control of the control section 17, music data is reproduced and is outputted to the HD recording/reproducing section 12 and the sound output section 15 via the bus 18. Further, the CD reproducing section 11 reads TOC (Table of Contents) information, which serves as an example of identification information recorded on the innermost part (read in area) of a CD, and outputs the information via the bus 18 to the control section 17. As is publicly known, the TOC information includes track number, a starting position of each piece of music data on a CD and includes absolute time on an end position of the final music data and so on.

Besides, although the present embodiment uses the CD reproducing section 11 as an example of the information reproducing device, the information reproducing device is not particularly limited. For example, it is also possible to use a DVD reproducing section for reproducing music and video data recorded on a DVD (Digital Versatile Disc) and an MD reproducing section for reproducing music data recorded on an MD (Mini Disc), and so on. Alternatively, these sections may be combined.

The HD recording/reproducing section 12 has a buffer memory, a HD, and a HD drive. Music data outputted from the CD reproducing section 11 is temporarily stored in a buffer memory via the bus 18 and is recorded on a HD by the HD drive under the control of the control section 17 (only when the user provides an instruction of recording). Further, at this point, the TOC information read by the CD reproducing section 11 is matched with the music data and is recorded on the HD. Moreover, under the control of the control section 17, the music data recorded on the HD is reproduced and is temporarily stored in the buffer memory. Thereafter, the music data is outputted via the bus 18 to the sound output section 15.

Additionally, when music data recorded on a CD or a HD is reproduced or when music data recorded on a CD is reproduced and is recorded on a HD, the HD recording/reproducing section 12 stores sound data, image data, text data, or the like as related information on a HD by using the HD drive, the related information being composed of at least any one of accompanied information related music data (described later) transmitted (provided) from the information providing server 2 and advertisement information related the music data or the accompanied information. Further, the HD recording/reproducing section 12 stores the TOC information , which has been read from the CD, in a predetermined memory of the HD while the TOC information is matched with the related information. In this case, the TOC information may be stored in a nonvolatile memory (e.g., EEPROM) which is different from the HD. Then, the image data, text data, sound data or the like having been recorded on the HD are reproduced under the control of the control section 17. The data is temporarily stored in the buffer memory and is outputted via the bus 18 to any one of the display control section 14 and the sound output section 15.

Besides, the HD stores information required to have access to the information providing server 2 via the network 4 (e.g., addresses on the network).

In addition, although the HD recording/reproducing section 12 is used as an example in the present embodiment, the HD recording/reproducing section 12 is not particularly limited. For example, it is also possible to use a CD-R recording/reproducing section for recording and reproducing music data on a CD-R and a DVD-R recording/reproducing section for recording and reproducing music data on a DVD-R/W, and so on. Alternatively, these sections may be used together.

Subsequently, the input section 13 receives an operation instruction from the user in response to an operation performed on the remote controller and the operating buttons by the user. An operating signal corresponding to the operation is generated and is outputted via the bus 18 to the control section 17 and so on.

The display section 14 includes a decoder for performing predetermined decryption (decoding) on image data, a liquid crystal display panel, and a displaying processing section for displaying image data and text data on the liquid crystal display panel. Under the control of the control section 17, information required for an operation of the on-vehicle AV apparatus 1 is displayed as character information and so on. Moreover, under the control of the control section 17, the display control section 14 displays the image data and text data about related information provided from the information providing server 2 , as an image, text, and so on. Furthermore, under the control of the control section 17, the display control section 14 displays the image data and text data outputted from the HD recording/reproducing section 12, as an image, text, and so on.

The sound output section 15 includes a sound processing section for performing predetermined sound processing on sound data, a DAC (Digital-to-Analog Converter) for converting digital sound data to an analog sound signal, an amplifier for amplifying an analog sound signal, and a speaker for outputting the amplified analog sound signal as an acoustic wave. With this configuration, the sound output section 15 outputs music data, which has been outputted from the CD reproducing section 11, as an acoustic wave from the speaker under the control of the control section 17. Further, the sound output section 15 outputs sound data about the related information, which has been provided from the information providing server 2, as an acoustic wave from the speaker under the control of the control section 17. Moreover, the sound output section 15 outputs sound data, which has been outputted from the HD recording/reproducing section 12, as an acoustic wave from the speaker under the control of the control section 17.

The communication section 16 performs data communication with the information providing server 2 via the network 4. Under the control of the control section 17, when information (signal) to be transmitted is inputted, the communication section 16 performs predetermined output interface processing on the signal and outputs the signal via the network 4 to the information providing server 2. Further, under the control of the control section 17, the communication section 16 performs predetermined input interface processing on information (signal) transmitted from the information providing server 2 via the network 4 and outputs the information to the control section 17 and so on.

Then, the control section 17 has a CPU serving as a computer having an arithmetic function, a RAM for operations, a ROM for storing various processing programs and data, an oscillation circuit, and so on. In response to an operating signal from the input section 5, the control section 17 generates control information for controlling the components based on the operation contents included in the signal and outputs the information via the bus 18 to the corresponding components. Thus, the control section 17 exercises control over the operations of the components constituting the on-vehicle AV apparatus 1.

Further, the control section 17 executes an information presenting program stored in the ROM or the like so as to function as an identification information acquiring device, an identification information transmitting device, a related information receiving device, a user presenting device, and a related information storing device.

To be specific, the control section 17 functions as the identification information acquiring device, so that TOC information corresponding to music data recorded on a CD is acquired from the CD reproducing section 11 (when music data has been already recorded on a HD, TOC information is acquired from the HD recording/reproducing section 12).

Subsequently, when music data recorded on a CD or a HD is reproduced (hereinafter, referred to as "CD reproduction or HD reproduction" ) or when music data recorded on a CD is reproduced and is recorded on a HD (hereinafter, referred to as "CD ripping"), the control section 17 functions as the identification information transmitting device together with the communication section 16 in order to request related information which is composed of at least any one of accompanied information related the music data and advertisement information related the music data or the accompanied information, so that the TOC information is transmitted via the network 4 to the information providing server 2.

Moreover, the control section 17 functions as the related information receiving device together with the communication section 16 , so that the control section 17 receives via the network 4 the related information having been transmitted from the information providing server 2 according to the TOC information. Then, the control section 17 functions as the user presenting device, so that when the music data is reproduced or when the music data is recorded, the related information is presented to the user. For example, if the related information is image data and text data, the data is displayed on the liquid crystal display panel. If the related information is sound data, the data is outputted from the speaker. Hence, the user can recognize the related information when the music data is reproduced or recorded.

In this case, the reproduction of the music data is not limited to a time period during which music is actually reproduced. The reproduction is a wide concept including loading for preparing for reproduction (entering a reproducing operation, though reproduction has not been actually started yet). Moreover, the recording of music data also has the same concept as the reproduction.

Additionally, the control section 17 functions as the related information storing device together with the HD recording/reproducing section 12, so that the related information is stored in a predetermined memory region of a HD while being matched with the TOC information. In this way, once the related information is stored in a HD, the related information may not be transmitted from the information providing server 2 when the same music data is reproduced from a CD or a HD.

### [Contents of related information]

Subsequently, the following will explain the specific contents of the accompanied information related the music data and the advertisement information related the music data or the accompanied information.

For example , the accompanied inf ormation related the music data is information accompanied (attached) with the music or a CD having stored the music. The information includes image data and text data of CD contents such as jacket photographs (hereinafter, referred to as "CD jacket photographs') on a CD package of the CD having stored the music, and photographs, lyrics, liner notes, music information (e.g., explanation on the background of the music), artist information (e.g., explanation on a lyricist, a composer, and a singer), and label information (e.g., explanation on a CD producing and sales company (organization) serving as a right holder or the like) printed on a booklet stored in the CD package, In addition, other than the contents of the CD, the information includes attribute information about music data registered for the CD in an information retrieval database 21a of the information providing server 2, which will be discussed later, information about the artist of the CD (e.g., portrait photographic images or the like which are not stored in the CD package but are used only for initial products), soundinformationof lyrics (reading of lyrics) which are printed on the booklet stored in the CD package.

Besides, if the provision of such accompanied information is a part of promotion performed by a CD producing and sales company acting as a right holder, the accompanied information can be also called advertisement information.

The advertisement information related music data is, for example, information provided to advertise the music or a CD having stored the music. For example, the advertisement information includes jacket photographs of another CD (e.g., an album) having stored the music, and the hit charts including the music.

The advertisement information related the accompanied information is, for example, information for advertising the accompanied information. The advertisement information includes, for example, promotion information about a new album released by the artist of the music (e.g., image or sound information indicating that the artist will release a new album on one day of next week), promotion information about a new release of the label of the music (e.g., listed images or sound information about new CDs which will be released in the future by the producing and sales company of the CD), and promotion information about a new release in the genre of the music (e.g., rock, jazz, etc.).

The accompanied information and the advertisement information may include moving images (e.g., a promotion video (PV) of the artist) as well as static images such as jacket photographic images.

### [Information providing server]

Subsequently, the following will explain the configuration and functions of the information providing server 2.

The information providing server 2 is fixed and installed by the information provider. As shown in FIG. 1, the information providing server 2 includes a storing section 21, an input section 22, a communication section 23, and a control section 24. These components are connected to one another via a bus 25.

For example, the storing section 21 is constituted of a hard disc or the like. As shown in FIG. 1, an information retrieval database 21a, a related information database 21b, an information matching database 21c, and a user information database 21d are configured in the storing section 21.

The information retrieval database 21a is provided to search for attribute information about music data based on TOC information. In this case, attribute information (e.g., a CD title , a song title, an artist's name, a composer's name, aproducer, and so on) about music data is registered (stored) while being matched with the TOC information. A publicly known so-called CDDB can be used as the information retrieval database 21a. Further, each piece of the information is provided with an identifier. Moreover, for example, when a new CD is released, the attribute information is registered by the operator in the information retrieval database 21a via the input section 22.

The related information database 21b registers (stores) accompanied information related music data and image data, text data, sound data, and so on concerning advertisement information related music data or the accompanied information. The accompanied information and the advertisement information are supposed to constitute the related information. Each piece of the information is provided with an identifier (e. g. , a different identifier for each kind of CDs). Besides, regarding the provision of the identifier, various kinds of processing are considered that include the provision of the same identifier to the related items of the information and the provision of a different identifier for each kind of the information even in related items.

Moreover, each of the accompanied information and advertisement information is provided with the number of points set by the right holder's side or the information provider. For example, when the information provider provides related information from the information providing server 2 to the on-vehicle AV apparatus 1, the number of points set by the right holder's side serves as a basis for calculating a value to be paid by the information provider to the right holder's side. This value is, for example, a charge (amount) of accompanied information such as CD contents included in the related information).

Meanwhile, for example, when the information provider provides related information from the information providing server 2 to the on-vehicle AV apparatus 1, the number of points set by the information provider serves as a basis for calculating a value to be paid by the right holder's side to the information provider. This value is, for example, a rate of advertisement information such as promotion information about a new release of a label included in related information, or an advertising rate (amount) of accompanied information if the provision of accompanied information such as CD contents is a part of promotion. Besides, the number of points is set according to how valuable information is, a provision period (e.g., an advertising period during which advertisement information is provided from the information providing server 2), and so on. In addition, the number of points may be set by both of the right holder's side and the information provider.

Further, for example, when a new CD is released, the accompanied information is registered in the related information database 21b via the input section 22 by the operator. Moreover, the advertisement information is registered and updated at any time via the input section 22 by the operator in response to a request from the CD sales and producing company.

The information matching database 21c registers (stores) attribute information about music data, which is registered in the information retrieval database 21a, and information (hereinafter, referred to as "matching information") formatching (correspondence) between accompanied information and advertisement information registered in the related information database 21b. For example, the database 21c registers information indicating that accompanied information with an identifier of "abc" corresponds to attribute information with an identifier of "xyz". For example, such matching information is also registered via the input section 22 by the operator.

The user information database 21d registers (stores) the user information of the on-vehicle AV apparatus 1 for each user. For example, the user information includes apparatus identification information ( specific to each the on-vehicle AV apparatuses 1), written information written in auser registration form (name, address, telephone number, e-mail address, sex, and so on that are written by the user when the on-vehicle AV apparatus 1 is purchased), and the history of access from the on-vehicle AV apparatus 1. The history of access includes the date and time of access and information for specifying related information having been transmitted to the on-vehicle AV apparatus 1 when access is made. Namely, based on the information for specifying the related information, it is possible to recognize which CD is occupied by the user. For example, the apparatus identification information and the written information are registered via the input section 22 by the operator when the on-vehicle AV apparatus 1 is purchased.

The input section 22 is constituted of a keyboard, a mouse, and so on. In response to an operation performed by the operator, the input section 22 receives an operation instruction from the operator. An operating signal corresponding to the operation is generated and is outputted via the bus 25 to the control section 24 and so on.

The communication section 23 is provided to perform data communication with the on-vehicle AV apparatus 1 or the right holder' side server 3 via the network 4.

The control section 24 has a CPU serving as a computer having an arithmetic function, a RAM for operations, a ROM for storing data and various programs such as a communication program, an oscillation circuit, and so on. When an operating signal is received from the input section 22, the control section 24 generates control information for controlling the components based on the operation contents included in the signal and outputs the information via the bus 25 to the corresponding components. Thus, the control section 24 exercises control over the operations of the components constituting the information providing server 2.

Further, the control section 24 executes an information providing program stored in the ROM or the like so as to function as an identification information receiving device, a related information acquiring device, a related information providing device, a value information providing device, and a user information managing device.

To be specific, the control section 24 functions as the identification information receiving device together with the communication section 23, so that TOC information transmitted from the on-vehicle AV apparatus 1 is received via the network 4.

Then, the control section 24 functions as the related information acquiring device, so that related information composed of at least any one of the accompanied information and the advertisement information is acquired from the related information database 21b based on the TOC information. For example, the control section 24 acquires attribute information matched with TOC information from the information retrieval database 21a, and the control section 24 acquires, as related information (attribute information may be included in related information), both or any one of accompanied information and advertisement information that are matched with the attribute information based on matching information registered in the information matching database 21c, from the related information database 21b.

Additionally, the information retrieval database 21a may be provided in an information retrieval server, which is connected to the information providing server 2 via the network 4 , instead of the information providing server 2. In this case, the information providing server 2 transmits TOC information via the network 4 to the information retrieval server and acquires attribute information returned from the information retrieval server.

Then, the control section 24 functions as the related information providing device together with the communication section 23, so that the related information is provided (transmitted) via the network 4 to the on-vehicle AV apparatus 1.

Further, the control section 24 functions as the value information providing device together with the communication section 23, so that value information according to related information provided to the on-vehicle AV apparatus 1 is provided via the network 4 to the right holder's side server 3.

As described above, a value according to related information includes a royalty fee to be paid by the information provider to the right holder and an advertising rate to be paid by the right holder to the information provider. If the value is money (amount) such as the royalty fee and the advertising rate, the control section 24 functions as the value calculating device, so that an amount is calculated as the value according to provided related information. For example, the control section 24 sums up the numbers of points attached (added) to advertisement information and accompanied information which are included in provided related information (the numbers are set by the right holder, the information provider, or both of them), and the product of the sum (points summed up) and a predetermined unit price is used as an amount serving as the value.

In this case, if only the number of points set by the right holder' s side is attached (added) to accompanied information and advertisement information which constitute related information, for example, the information provider pays an amount serving as a calculated value to the right holder (e.g., automatically paid into a bank account from the information providing server 2). In this case, the value information provided to the right holder's side server 3 includes information indicating payment from the information provider to the right holder (for example, information indicating an amount serving as the value is paid (e.g., a payment certificate)).

Meanwhile, if only the number of points set by the information provider is attached (added) to accompanied information and advertisement information which constitute related information, for example, the information provider demands the payment of an amount serving as a calculated value. In this case, value information provided to the right holder's side server 3 includes information indicating the payment of the amount from the right holder to the information provider (for example, information indicating a demand for payment of an amount serving as the value (e.g., a bill)).

Incidentally, in described above, if only the number of points set by any one of the right holder' s side and the information provider is present, any one of the right holder and the information provider pays the value to the other in a unilateral manner. However, the payment is not particularly limited. Even if only the number of points set by any one of the right holder' s side and the information provider is present , a value may be transferred between them. For example, in this case, information about a value for the right holder or a value for the information provider is attached (added) to the number of points set by the right holder's side, and a value calculated based on the number of points ( for a value of the right holder) set by the right holder' s side is a value paid by the information provider to the right holder. On the other hand, a value calculated based on the number of points (for a value of the information provider) set by the right holder's side is a value paid by the right holder to the information provider. This holds true in the case of the number of points set by the information provider.

By the way, if the number of points set by the right holder' s side and the information provider is attached (set) to accompanied information and advertisement information which constitute related information (for example, when the number of points set by the right holder's side is attached (added) to the accompanied information and the number of points set by the information provider is attached (added) to advertisement information), the control section 24 calculates an integrated value (hereinafter, referred to as a right holder point integrated value) of the points set by the right holder's side and an integrated value (hereinafter, referred to as an information provider point integrated value) of points set by the information provider, and the control section 24 compares the values to calculate an absolute value of a difference . Then, the product of the absolute difference and a predetermined unit price are used as an amount serving as a value.

If the right holder point integrated value is larger than the information provider point integrated value, the information provider pays an amount serving as a calculated value (value corresponding to the difference) to the right holder. In this case, value information provided to the right holder' s side server 3 includes information about the payment of the amount from the information provider to the right holder. Further, if the information provider point integrated value is larger than the right holder point integrated value, the information provider demands the payment of an amount serving as a calculated value to the right holder. In this case, value information provided to the right holder's side server 3 includes information about the payment of the amount from the right holder to the information provider. Furthermore, if the right holder point integrated value and the information provider point integrated value are equal to each other, an amount serving as a value is offset. In this case, value information provided to the right holder's side server 3 includes, as information indicating the payment of an amount, information indicating that a values is offset.

In addition to the above case where an value according to related information is handled based on an amount (money), for example, the value is handled as the related information or the value is handled by transferring information having an added value such as user information.

If the value is handled as related information, that is, if related information (e.g., advertisement information such as promotion information about a new release of the right holder' s side or accompanied information when the provision of the accompanied information such as CD contents is a part of promotion) provided from the information provider to the user is used as a value instead of a royalty fee paid from the information provider to the right holder, related information provided to the on-vehicle AV apparatus 1 is information in which the value according to the related information is offset by the advertising effect of the related information. In this case, it is not necessary to consider an amount serving as a value calculated based on the number of points. Further, in this case, value information provided to the right holder's side server 3 includes information indicating that related information is provided to the on-vehicle AV apparatus 1 instead of a value paid from the information provider to the right holder.

Additionally, if the value is handled by transferring information having an added value such as user information, that is, if user information provided from the information provider to the right holder's side is used as the value instead of a royalty fee paid by the information provider to the right holder, value information provided to the right holder's side server 3 includes, from the user information, data or the like which has ages and sexes and is statistically valuable for use. Also in this case, it is not necessary to consider a value calculated based on the number of points. Moreover, the control section 24 functions as the user information managing device, user information is managed for each user of the on-vehicle AV apparatus 1 by using the user information database 21d. Every time TOC information is transmitted from the on-vehicle AV apparatus 1, user information is updated based on the TOC information. Namely, the control section 24 can always recognize the latest user information ( e. g. , information indicating which CD is currently occupied by the user) by updating the access history included in user information. Further, when the control section 24 acquires the related information, advertisement information according to the user information may be acquired. For example, regarding music data stored on a CD currently occupied by the user, advertisement information about a CD of the same genre and the same artist is acquired.

Besides, for example, the following mechanism may be created: every time related information is provided to the on-vehicle AV apparatus 1, the number of points attached (added) to advertisement information and accompanied information, which are included in the related information, is summed up for each user, and the number of points is returned to the user as presents and discounts in, for example, music distribution (distribution of a bonus track) and purchase of CDs and presents according to the number of points.

Additionally, the information providing program may be downloaded from a predetermined server connected to the network 4.

### [Right holder's side server]

Subsequently, the configuration and functions of the right holder server 3 will be explained below.

The right holder's side server 3 is fixed and installed by the right holder' s side. As shown in FIG. 1, the right holder' s side server 3 is constituted of a storing section 31, an input section 32, a communication section 33, and a control section 34. These components are connected to one another via a bus 35.

The storing section 3 is constituted of a hard disc and so on. Value information transmitted from the information providing server 2 is stored in the storing section 31.

The control section 34 has a CPU serving as a computer having an arithmetic function, a RAM for operations, a ROM for storing data and various programs such as a communication program, an oscillation circuit, and so on. In response to an operating signal from the input section 32, the control section 34 generates control information for controlling the components based on the operation contents included in the signal and outputs the information via the bus 35 to the corresponding components. Thus, the control section 34 exercises control over the operations of the components constituting the information retrieval server 3.

Further, the control section 34 receives value information, which has been transmitted from the information providing server 3 , via the network 4 and the communication section 33, and stores the value information in the storing section 31.

The functions of the input section 32 and the communication section 33 are similar to those of the input section 22 and the communication section 23 in the information providing server 2.

### [Operations of the on-vehicle AV system]

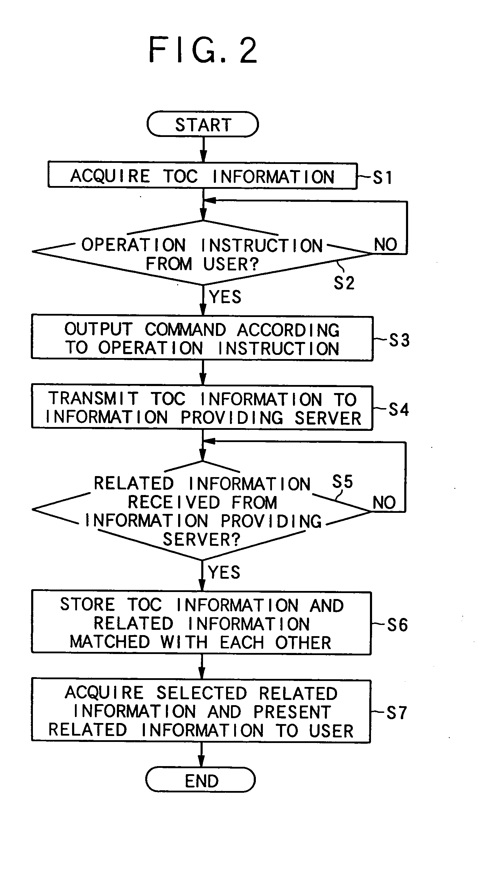

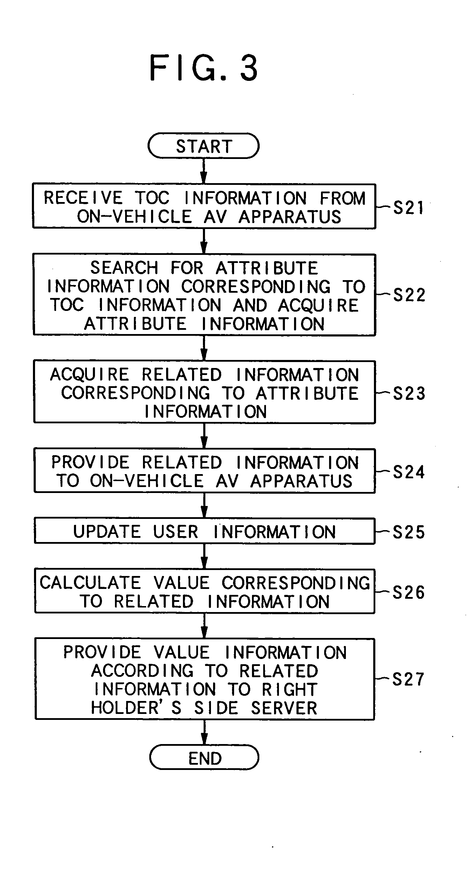

Referring to FIGS. 1 to 3 , the operations of the on-vehicle AV system S will be described below. FIGS. 2 and 3 show operations when CD reproduction, HD reproduction, and CD ripping are performed in the on-vehicle AV apparatus 1. To be specific, FIG. 2 is a flowchart showing operations performed by the control section 17 of the on-vehicle AV apparatus 1, and FIG. 3 is a flowchart showing operations performed by the control section 24 of the information providing server 2.

Referring to FIG. 2, the operations in the on-vehicle AV apparatus 1 will be firstly described below.

In the operations of FIG. 2, for example, when a CD which is purchased at a store and is occupied by the user is brought into a vehicle and is loaded into the CD reproducing section 11, the control section 17 of the on-vehicle AV apparatus 1 acquires TOC information read from the innermost periphery of the CD by the CD reproducing section 11, and the control section 17 stores the TOC information in, for example, the RAM for operations (step S1).

Subsequently, when the user operates the operating buttons provided on the input section 13 to input any one of operation instructions of CD reproduction, HD reproduction, and CD ripping, the control section 17 recognizes the instruction (step S2: Y) and outputs a command corresponding to the operation instruction to each of the sections (step S3).

For example, if an operation instruction of CD reproduction is inputted, a command to reproduce music data is provided to the CD reproducing section 11. Thus, the CD reproducing section 11 makes a transition to a reproducing operation after being prepared for reproduction.

Meanwhile, if an operation instruction of CD ripping is inputted, a command to reproduce music data is provided to the CD reproducing section 11, and a command to record music data is provided to the HD recording/reproducing section 12. Thus, the CD reproducing section 11 makes a transition to a reproducing operation after being prepared for reproduction, and the HD recording/reproducing section 12 makes a transition to a recording operation after being prepared for recording (namely, CD ripping is normally performed concurrently with CD reproduction). Besides, when music data is recorded on a HD, TOC information is also stored while being matched with the music data.

Meanwhile, when an operation instruction of HD reproduction is inputted, a command to reproduce music data is provided to the HD recording/reproducing section 12, and TOC information, which has been stored on a HD while being matched with music data, is acquired from the HD recording/reproducing section 12. Hence, the HD recording/reproducing section 12 makes a transition to a reproducing operation after being prepared for reproduction.

Subsequently, through the communication section 16 , the control section 17 establishes communicationwith the information providing server 2 via the network 4 and transmits apparatus identification information together with acquired TOC information via the network 4 to the information providing server 2 (step S4). Operations in the information providing server 2 or the like having received the TOC information will be described later.

Subsequently, when the on-vehicle AV apparatus 1 receives related information, which has been provided (transmitted) from the information providing server 2 according to the TOC information, via the network 4 (step S5: Y), the control section 17 causes the HD recording/reproducing section 12 to store the TOC information and the related information which are matched with each other (step S6).

Then, the control section 17 provides the related information to the user when music data is reproduced or when music data is recorded (step S7). Thus, the user can see accompanied information such as jacket photographic images displayed on the screen of the liquid crystal display panel and lyrics of music while listening to reproduced music.

Moreover, if related information includes accompanied information and advertisement information, the control section 17 displays the accompanied information and advertisement information on the same screen of the liquid crystal display panel to present the information to the user. For example, a photographic image of the artist of currently reproduced music is displayed on the right half of the screen, and a jacket photographic image of a CD to be released soon by the artist is displayed (release date is also displayed) on the left half of the screen. Thus, it is possible to increase users' appetite for purchasing the CD.

Referring to FIG. 3, operations in the information providing server 2 will be explained below. Besides, the operations of FIG. 3 are performed by executing the information providing program in the control section 24.

In the operations of FIG. 3, when the control section 24 of the information providing server 2 receives TOC information and apparatus registration information, which have been transmitted from the on-vehicle AV apparatus 1, via the network 4 (step S21), the control section 24 refers to the information retrieval database 21a to acquire attribute information about music data corresponding to the TOC information (step S22).

Subsequently, based on matching information registered in the information matching database 21c, the control section 24 acquires as related information both or any one of accompanied information and advertisement information that are matched with the attribute information from the related information database 21b (stepS23). Then, the control section 24 provides (transmits) the related information via the network 4 to the on-vehicle AV apparatus 1 (step S24).

Subsequently, the control section 24 refers to the user information database 21c and updates user information corresponding to the received apparatus identification information (step S25). Namely, the control section 24 adds, to the user information, information for specifying a date and time of access from the on-vehicle AV apparatus 1 and related information transmitted to the on-vehicle AV apparatus 1. Thus, the control section 24 can always recognize the latest information about which CD is occupied by the user.

Then, as described above, the control section 24 calculates an amount serving as a value corresponding to provided related information based on the number of points added to both or any one of accompanied information and advertisement information which are included in the provided related information (step S26).

Subsequently, the control section 24 provides value information according to related information via the network 4 to the right holder's side server 3, according to any one of the case where the value according to related information is handled based on an amount, the case where the value is handled based on related information, and the case where the value is handled based on user information (step S27). Whether a value according to related information is handled based on an amount, the value is handled based on related information, or the value is handled based on user information is set in advance and is stored in storing section 21.

For example, if a value according to related information is handled based on an amount, as described above, the control section 24 provides, to the right holder's side server 3, information indicating that an amount serving as a value is paid, information about a demand for payment of an amount serving as a value, or information indicating that a value is offset.

Meanwhile, if a value according to related information is handled based on the related information, instead of a value to be paid by the information provider to the right holder, the control section 24 provides, to the right holder's side server 3 , information indicating that the related information is provided to the on-vehicle AV apparatus 1.

Meanwhile, if a value according to related information is handled based on user information, the control section 24 provides user information updated in step S25 to the right holder' s side server 3. Thus, the right holder can effectively use the user information for a promotion.

As described above, according to the above embodiment, when related information about music data is provided to the on-vehicle AV apparatus 1, a value according to the related information can be handled more efficiently in various forms, and value information can be promptly informed to the right holder's side. Therefore, it is possible to further activate a system for providing the related information to the user during the reproduction or recording of music data.

Additionally, in the above embodiment, TOC information is used as an example of the identification information of the present application. The identification information is not particularly limited. Any information is applicable as long as music data or the like can be specified. For example, if text information including the attribute information can be read from a CD according to a CD text standard, the on-vehicle AV apparatus 1 may acquire the text information as identification information instead of TOC information and transmit the information via the network 4 to the information providing server 2. Further, program information such as music data may be used as identification information.

Moreover, in the above embodiment, the information retrieval database 21a is provided in the information providing server 2. A part of the information retrieval database 21a may be provided beforehand in the on-vehicle AV apparatus 1 serving as a terminal. Namely, attribute information and so on about known music data is provided beforehand in the on-vehicle AV apparatus 1, the attribute information is directly transmitted from the on-vehicle AV apparatus 1, not via the information providing server 2 , to the information providing server 2 , and the information retrieval database 21a of the information providing server 2 is used only for attribute information or the like about unknown music data including a new release.

Further, in the above embodiment, music data recorded on a CD is reproduced and is recorded on a HD as an example of "program information recorded on one recording medium is reproduced and is recorded on another recording medium". As another example, the on-vehicle AV apparatus 1 may download music data (e.g., music data compressed in MP3) from a music distributing server connected to the network 4 and record the data on a HD. In this case, identification information corresponding to music data recorded on a HD may be downloaded from the music distributing server together with the music data. Alternatively, the user may input the identification information when music data is recorded on a HD.

Besides, in the above embodiment, music data is recorded on a HD as it is. For example, music data may be recorded on a HD after being compressed in formats such as MP3 and ATRAC3 or being encrypted to protect copyrights.

Moreover, in the above embodiment, the transfer of a value between the information provider and the right holder's side was mainly discussed. The following mechanism of returning the number of points to the user may be constructed: the number points is summed up for each user, and the user is privileged to receive presents and discounts in music distribution (distribution of a bonus track) and purchase of CDs according to number of points.

Further, in the above embodiment, the following case was discussed: added value information including an amount and user information is transferred as value information between the information providing server 2 and the right holder' s side server 3. From the right holder's side server 3 to the information providing server 2, information (for example, added value information including a advertising period and how the advertisement information is provided to the user) indicating the advertising purpose of the right holder regarding the handling of advertisement information and so on may be transmitted as a part of value information.

Besides, in the present embodiment, the most suitable case was discussed where value information is automatically transferred between the information providing server 2 and the right holder' s side server 3 via the network 4 . Value information is not always transferred via the network 4. A part of the value information may be transferred without passing through the network 4. Namely, for example, setting can be performed according to the characteristics (immediate effect, confidentiality, and so on) of information which includes information having added values such as user information as value information.

Additionally, in the above embodiment, the information reproducing apparatus of the present application are applied to the on-vehicle AV apparatus. The application of the apparatuses are not particularly limited. For example, the information reproducing apparatus and the information reproducing/recording apparatus may be applied to a domestic AV apparatus and an on-vehicle navigation apparatus.

The invention may be embodied in other specific forms without departing from the spirit or essential characteristics thereof . The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An information providing system (S) **characterized in that** the system comprises:
an information providing apparatus (2) for providing information via a network (4),
a right holder's side apparatus (3) which is connected to the information providing apparatus (2) via the network (4), the right holder's side having a right of information provided by the information providing apparatus (2); and
an information reproducing apparatus (1) which can have access to the information providing apparatus (2) via the network (4), has an information reproducing device (11) for reproducing program information recorded on a recording medium, and transmits identification information corresponding to the program information via the network (4) to the information providing apparatus (2) in order to request related information constituted of at least any one of accompanied information related the program information and advertisement information related the program information or the accompanied information when the program information is reproduced; comprising:
an identification information receiving device (24) which receives via the network (4) the identification information transmitted from the information reproducing apparatus (1);
a related information acquiring device (24) which acquires the related information based on the received identification information;
a related information providing device (24) which provides the related information via the network (4) to the information reproducing apparatus (1); and
a value information providing device (24) which provides value information according to the provided related information via the network (4) to the right holder's side apparatus (3).

2. The information providing system (S) according to claim 1, wherein the information reproducing apparatus (1) comprises an information recording device (12) which reproduces the program information recorded on the recording medium and records the program information on another recording medium.

3. The information providing system (S) according to claim 1 or 2, wherein regarding the value information, a value according to the related information is offset by an advertising effect of the provided related information or accompanied inevitability.

4. The information providing system (S) according to any one of claims 1 to 3, wherein the value information is information indicating payment of a money according to the related information.

5. The information providing system (S) according to any one of claims 1 to 4, wherein the information providing apparatus (2) further comprises a user information managing device which manages user information for each user of the information reproducing apparatus,
the user information managing device (24) updates the user information based on the identification information every time the identification information is transmitted from the information reproducing apparatus (1), and
the value information is managed as a part of the user information by the user information managing device (24).

6. The information providing system (S) according to any one of claims 1 to 5, wherein the information reproducing apparatus (1) comprises a user presenting device (17) which presents to a user the related information provided from the information providing apparatus (2) when the program information is reproduced.

7. An information providing apparatus (2) in an information providing system (S) **characterized in that** the system comprises:
an information providing apparatus (2) for providing information via a network (4),
a right holder's side apparatus (3) which is connected to the information providing apparatus (2) via the network (4), the right holder's side having a right of information provided by the information providing apparatus (2); and
an information reproducing apparatus (2) which can have access to the information providing apparatus (2) via the network (4), has an information reproducing device (11) for reproducing program information recorded on a recording medium, and transmits identification information corresponding to the program information via the network (4) to the information providing apparatus in order to request related information constituted of at least any one of accompanied information related the program information and advertisement information related the program information or the accompanied information when the program information is reproduced;
wherein the information providing apparatus (2) comprises:
an identification information receiving device (24) which receives via the network (4) the identification information transmitted from the information reproducing apparatus (1);
a related information acquiring device (24) which acquires the related information based on the received identification information;
a related information providing device (24) which provides the related information via the network to the information reproducing apparatus (1); and
a value information providing device (24) which provides value information according to the provided related information via the network to the right holder's side apparatus (3).

8. An information recorded medium wherein a program for computer including an providing apparatus (2) in an information providing system (4) comprising: the information providing apparatus (2) for providing information via a network (4), a right holder's side apparatus (3) which is connected to the information providing apparatus (2) via the network (4), the right holder's side having a right of information provided by the information providing apparatus (2); and an information reproducing apparatus (1) which can have access to the information providing apparatus via the network (4), has an information reproducing device (11) for reproducing program information recorded on a recording medium, and transmits identification information corresponding to the program information via the network (4) to the information providing apparatus (2) in order to request related information constituted of at least any one of accompanied information related the program information and advertisement information related the program information or the accompanied information when the program information is reproduced, is recorded so as to be read by the computer, the program makes the computer function as:
receiving via the network the identification information transmitted from the information reproducing apparatus (1);
acquiring the related information based on the received identification information;
providing the related information via the network (4) to the information reproducing apparatus (1); and
providing value information according to the provided related information via the network (4) to the right holder's side apparatus (3).

9. An information providing method in an information providing system (4) **characterized in that** the system (4) comprises: the information providing apparatus (2) for providing information via a network (4), a right holder' s side apparatus (3) which is connected to the information providing apparatus (2) via the network (4), the right holder's side having a right of information provided by the information providing apparatus (2); and an information reproducing apparatus (1) which can have access to the information providing apparatus (2) via the network (4), has an information reproducing device (11) for reproducing program information recorded on a recording medium, and transmits identification information corresponding to the program information via the network to the information providing apparatus in order to request related information constituted of at least any one of accompanied information related the program information and advertisement information related the program information or the accompanied information when the program information is reproduced, comprising the processes of:
receiving via the network the identification information transmitted from the information reproducing apparatus (1);
acquiring the related information based on the received identification information;
providing the related information via the network (4) to the information reproducing apparatus (1); and
providing value information according to the provided related information via the network (4) to the right holder's side apparatus (3).
